Europäisches Patentamt

European Patent Office

Office européen des brevets

(11) Numéro de publication: **0 024 255**
**B1**

(12) **FASCICULE DE BREVET EUROPEEN**

(45) Date de publication du fascicule du brevet: **13.02.85**

(21) Numéro de dépôt: **80810242.0**

(22) Date de dépôt: **01.08.80**

(51) Int. Cl.⁴: **A 61 C 1/00,** A 61 C 19/00

(54) **Distributeur de fluides sous pression.**

(30) Priorité: **08.08.79 CH 7269/79**

(43) Date de publication de la demande:
**25.02.81 Bulletin 81/08**

(45) Mention de la délivrance du brevet:
**13.02.85 Bulletin 85/07**

(84) Etats contractants désignés:
**AT DE FR IT NL SE**

(56) Documents cités:
**DE-A-2 166 770**
**DE-B-1 281 102**
**US-A-3 718 973**
**US-A-4 106 198**

(73) Titulaire: **CBS Biotechnic SA**
**18, quai Maria Belgia**
**CH-1800 Vevey (CH)**

(72) Inventeur: **Briner, Alex**
**23, route du Stand**
**CH-1260 Nyon (CH)**
Inventeur: **Sandhaus, Sami, Dr.**
**4, avenue de Provence**
**CH-1007 Lausanne (CH)**

(74) Mandataire: **Dietlin, Henri et al**
**DIETLIN, MOHNHAUPT & Cie 16, rue du Mont-Blanc**
**CH-1201 Genève (CH)**

Courier Press, Leamington Spa, England.

## Description

L'invention a pour objet un distributeur de fluides sous pression, notamment pour usage dentaire.

En chirurgie et en médecine dentaire, l'administration de liquides médicamenteux se fait généralement au moyen de seringues. Il est évident pour le praticien qu'avec des seringues il n'est pas possible de disposer en continu d'une alimentation en liquides. Les seringues contenant un petit volume de liquide, le praticien est constamment obligé de les remplir lorsqu'il a des tissus à traiter. L'exemple le plus courant est le traitement des canaux radiculaires, traitement pour lequel le praticien est obligé de remplir plusieurs fois sa seringue avec par exemple de la chloramine.

Il existe des unités de distribution permettant de distribuer alternativement de l'air comprimé, de l'eau ou un liquide. Ces appareils ne peuvent être désinfectés, de sorte qu'ils laissent à désirer du point de vue aseptique. Les eaux des robinets, des seringues ou des sprays ne sont pas dépourvues de bactéries et sont riches en éléments abandonnés par la corrosion des tuyauteries et en dépôts calcaires. Un tel distributeur est décrit dans le brevet DE—B—1281102.

Le but de l'invention est de mettre à la disposition du praticien un distributeur de fluides qui permette l'alimentation en continu de tous les liquides nécessaires dans un cabinet dentaire, ces liquides étant véhiculés par le distributeur sur simple commande par le praticien avec ou sans air comprimé ou ozone. Le distributeur de liquides proposé présente la particularité de pouvoir déconnecter les conduites d'air et d'eau reliant les instruments pour les désinfecter et/ou les stériliser avant l'emploi. D'autre part, le distributeur devra présenter l'avantage de pouvoir être désinfecté, par exemple au moyen d'une source d'ozone qu'il fournit lui-même.

Le distributeur de fluides sous pression, notamment pour usage dentaire selon l'invention, comprenant un boîtier, au moins une unité de stockage d'un liquide, une source d'air comprimé, une électrovalve étant connectée entre l'unité de stockage et la source d'air comprimé et étant agencée pour ouvrir ou fermer l'amenée d'air comprimé dans l'unité de stockage, un canal d'évacuation plongeant dans le liquide de l'unité de stockage étant connecté à une borne d'évacuation du liquide à connexion rapide placée sur le boîtier est caractérisé en ce qu'au moins une deuxième électro-valve est connectée entre la source d'air comprimé et au moins une borne de sortie d'air comprimé à connexion rapide, les bornes de sortie d'air comprimé à connexion rapide étant placées sur le boîtier adjacentes à la borne de connexion rapide reliée au canal d'évacuation de l'unité de stockage, chacune des électro-valves comprenant deux électrodes de commande et étant ouvertes par deux actions simultanées de sélection et de commande sur chaque électrode au moyen d'interrupteurs de sélection, respectivement de commande.

Le distributeur peut comprendre des bornes de connexion rapide des sorties de liquide et d'air comprimé qui sont placées adjacentes par paire sur le boîtier.

Un générateur d'ozone peut être placé à la suite d'une électro-valve, elle-même reliée à la source d'air comprimé, le générateur aboutissant à une borne de sortie à connexion rapide.

Dans un mode d'exécution préféré, un interrupteur de sélection en liaison avec une électrode de chaque électro-valve est prévu pour chaque électro-valve et placé sur le boîtier en regard de la borne de connexion rapide d'évacuation correspondante, les deuxièmes électrodes de chaque électro-valve étant reliées à un interrupteur de commande général commun ou à un interrupteur de commande indépendant.

Le dessin représente, à titre d'exemple, un mode de réalisation d'un distributeur de fluides aseptique pour usage médical selon l'invention.

Dans le dessin:

La fig. 1 est une vue en perspective d'un distributeur de fluides aseptique monté sur un pied et relié à une boîte d'alimentation d'air sous pression, et

la fig. 2 est un schéma montrant le fonctionnement des organes de distribution de l'appareil de la fig. 1.

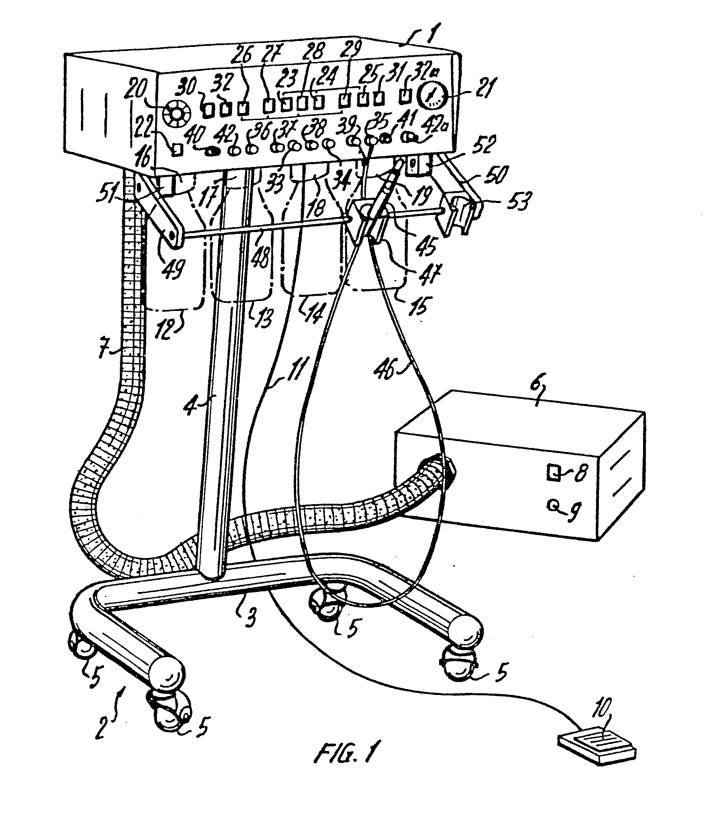

Le distributeur de fluides aseptique représenté dans la fig. 1 comprend un boîtier 1 monté sur un châssis 2 se présentant sous la forme d'une tube coudé en U placé horizontalement et formant un pied 3 surmonté d'une tige 4 supportant le boîtier 1. Le tube coudé 3 formant le pied porte quatre roulettes pivotantes 5 permettant à l'ensemble de rouler sur le sol et par conséquent d'être amené facilement à l'endroit désiré par l'utilisateur.

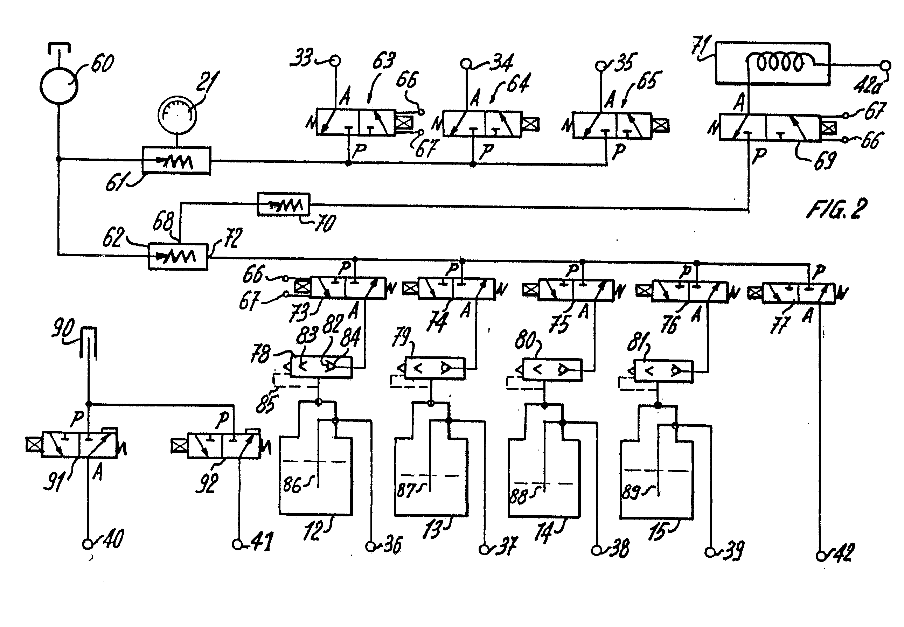

Le boîtier 1 du distributeur de la fig. 1 est relié à un boîtier de raccordement 6 généralement posé sur le sol par l'intermédiaire d'un tuyau souple 7. Le boîtier de raccordement 6 comprend deux électrovalves d'entrée non représentées pour de l'air sous pression et de l'eau, un filtre à air non représenté placé dans le circuit d'air, un transformateur, un interrupteur général 8 et une lampe témoin 9. L'interrupteur général 8 commande les deux électro-valves non représentées permettant d'ouvrir ou de fermer l'arrivée en eau et en air et enclenche le transformateur transformant une tension d'entrée de 220 V en une tension de 24 V. A l'intérieur du tuyau souple 7 passe une conduite d'alimentation en eau, une conduite d'alimentation en air, toutes deux branchées sur leur électro-valve respective, et un câble électrique livrant au boîtier 1 une tension de 24 V. Une seule manoeuvre de l'interrupteur général 8 permet simultanément de couper et d'enclencher l'arrivée de l'air et de l'eau par la commande des électro-valves non représentées et de mettre hors tension ou sous tension le boîtier 1. La lampe témoin 9 permet à l'utilisateur de voir si le boîtier de raccordement et par conséquent le boîtier 1 est sous tension. Le filtre à air contenu dans le boîtier de raccordement est un filtre LUWA permettant un fonctionnement de 4000 heures et éliminant toutes particules en suspension dans l'air jusqu'à 2 $\mu$ de diamètre. Le boîtier 1 est d'autre part relié à un contacteur à pied 10 par l'intermédiaire d'un câble 11. Le contacteur à pied 10 et son fonctionnement seront décrits en détail plus loin en regard de la fig. 2. Le contacteur à pied 10 permet de commander une fonction du distributeur qui a été présélectionnée par l'utilisateur sur le boîtier 1 par une simple pression du pied. Ce contacteur 10 est parfaitement connu des praticiens et était déjà présent dans les appareils de l'art antérieur. Il permet au praticien de commander une alimentation en fluides par une simple action du pied et par conséquent en lui laissant les mains libres.

Sous le boîtier 1 sont suspendues quatre unités de stockage 12, 13, 14 et 15 pour des liquides divers. Les unités 12 à 15 se présentent sous la forme de bouteilles transparentes permettant de reconnaître les liquides qu'elles contiennent, présentant des goulots filetés vissés dans des cols 16, 17, 18 et 19 prévus à cet effet sous le boîtier 1.

Lorsque le distributeur de la fig. 1 est utilisé dans un cabinet dentaire, les quatre unités de stockage contiennent habituellement les liquides suivants:

— chloramine pour le traitement des canaux radiculaires,
— eau distillée pour le refroidissement des forets utilisés en chirurgie de même que pour la neutralisation de la chloramine précédemment utilisée,
— hibitan ou tout autre antiseptique propre aux traitements en parodontie,
— sérum physiologique, également employé en chirurgie.

La face frontale du distributeur de la fig. 1 comprend un bouton de commande 20 d'un régulateur de pression d'air non représenté dans la fig. 1 et permettant de régler la pression d'air entre 0 et 6 atmosphères, un indicateur de pression 21 et un interrupteur général 22. D'autre part, une rangée d'interrupteurs de présélection sont prévus en haut de la face frontale du boîtier 1. Dans la fig. 1 sont représentés trois interrupteurs 23, 24 et 25 de présélection pour de l'air sous pression et quatre interrupteurs de présélection 26, 27, 28 et 29 pour la distribution des liquides stockés dans les bouteilles 12 à 15. En 30 et 31 sont représentés des interrupteurs de présélection pour de l'eau, en 32 un interrupteur d'air sous pression préréglé à 2 atmosphères et en 32a un interrupteur de présélection d'ozone. En regard de chaque interrupteur de présélection 23 à 33 est placée une borne de connexion à verrouillage rapide pour la sortie du fluide correspondant. En regard des interrupteurs d'air sous pression 23, 24 et 25 sont placées des bornes de sortie d'air sous pression 33, 34 et 35, alimentées par le régulateur de pression d'air non représenté dans la fig. 1. En regard des interrupteurs de présélection 26, 27, 28 et 29 sont placées des bornes de sortie de liquides 36, 37, 38, 39, reliées à des tubes non représentés dans la fig. 1 plongeant dans les liquides à l'intérieur des bouteilles 12, 13, 14 et 15. Finalement, en regard des interrupteurs 30, 31, 32, 32a sont placées des bornes de sortie 40, 41, 42 et 42a livrant respectivement de l'eau (bornes 40 et 41), de l'air sous pression constante de 2 atmosphères (42) et de l'ozone (42a). Les bornes de connexion rapide avec fermeture à verrouillage sont des bornes circulaires à sortie central présentant une bague de verrouillage concentrique à la borne. Les liaisons entre les bornes 33 à 42a, les bouteilles 12 à 15, les conduites d'alimentation en eau, air et ozone et les interrupteurs de présélection correspondants 23 à 32a seront décrits et expliqués en détail à l'aide de la fig. 2. On remarquera encore dans la fig. 1, que les bornes d'alimentation 37, 38 et 39 en liquide provenant des bouteilles 13, 14 et 15 sont placées respectivement à côté des bornes 33, 34 et 35 d'alimentation en air sous pression. Cette disposition permet de brancher sur deux bornes adjacentes un instrument qui pourra être alimenté simultanément en liquide et en air sous pression. Un tel instrument, notamment une seringue eau et air, est représenté en 45 et est alimenté par une conduite de distribution double 46 branchée à la borne d'alimentation en air 35 et à la borne d'alimentation 39 fournissant de l'eau distillée contenue dans la bouteille 15. En pressant l'un ou l'autre des interrupteurs 25 et 29 ou les deux simultanément, correspondant aux bornes 35 et 39, la fraise sera alimentée en air, en eau ou en air et en eau. L'instrument 45 est maintenu dans une porte-instrument 47 fixé sur une tige 48 maintenue à ses extrémités par un support 49, respectivement 50 solidaire d'une traverse 51, respectivement 52 du boîtier 1. Sur la fig. 1 du dessin, il n'est représenté qu'un deuxième porte-instrument 53, mais il est évident que le distributeur sera livré avec au moins cinq porte-instruments. Les porte-instruments sont orientables, selon l'axe de la tige 48 et peuvent également être montés avec un interrupteur à bascule mis en fonctionnement par le fait que l'instrument est retiré du porte-instrument. Les interrupteurs solidaires du porte-instrument sont connus des praticiens et permettent de remplacer la présélection à l'aide des interrupteurs à touches 23 à 32a ou tout autre moyen de présélection. Il seront cependant montés sur demande de l'utilisateur. Chaque fonction sera dans le mode d'exécution des fig. 1 et 2 présélectionnée par le praticien à l'aide des interrupteurs à touches 23 à 32, les touches de ces interrupteurs contenant des lampes témoins indiquant si l'interrupteur est enclenché. Le praticien a ainsi un plus grand nombre de possibilités que celles que lui offrent les porte-instruments avec interrupteur incorporé, car il peut choisir chacune des fonctions de l'appareil indépendamment l'une de l'autre et ceci sans obligatoirement retirer un instrument.

Dans le schéma de la fig. 2, est représentée la conduite d'air 60 filtré à 2 $\mu$ provenant du boîtier de raccordement 6 de la fig. 1 par l'intermédiaire du tuyau 7. La conduite 60 se sépare en deux tronçons et parvient à deux régulateurs de pression 61 et 62. Le régulateur 61 est relié à l'indicateur de pression 21 visible sur la face frontale du boîtier 1 de la fig. 1 et est commandé à l'aide du bouton 20, de manière à livrer de l'air sous une pression réglable allant de 0 à 6 atmosphères. La sortie du régulateur 61 parvient à une entrée P d'une électro-valve 63, respectivement 64 et 65 dont la sortie A est reliée à la borne de connexion rapide 33, respectivement 34 et 35 d'air sous pression du boîtier 1 (voir également fig. 1). Les électro-valves 63, 64 et 65 sont des éléments pneumatiques Kuhnke (Allemagne) à trois/deux voies fermées au repos. Elles sont disponibles dans le commerce et vendues sous le no. 65 172. Dans le mode d'exécution des fig. 1 et 2, elles sont branchées avec une diode non représentée disposée dans le circuit d'une des deux électrodes de commande 66 et 67 représentées dans la fig. 2 en regard de l'électro-valve 63. Les électro-valves 63 à 65 sont branchées de manière à ouvrir la voie allant de l'entrée P à la sortie A lorsqu'un signal électrique est appliqué simultanément sur les deux électrodes 66 et 67 (voir électro-valve 63). Ainsi, l'électro-valve 63 a une de ses électrodes 66 branchée à un potentiel positif par l'intermédiaire de l'interrupteur de présélection 23 correspondant à la borne d'alimentation 33, l'autre électrode 67 étant également mise à un potentiel positif soit à l'aide du commutateur à pied 10 (fig. 1) soit à l'aide d'un interrupteur incorporé à un porte-instrument correspondant 53 comme expliqué plus haut, soit à un contacteur non représenté monté sur un instrument. Le fonctionnement des électro-valves 64 et 65 est identique à celui de l'électro-valve 63 et ces deux électro-valves 64 et 65 comprennent également deux électrodes non représentées dont l'une est branchée aux interrupteurs de présélection 24 et 25 (fig. 1), l'autre au commutateur à pied 10 ou à l'interrupteur non représenté des porte-instruments respectifs 53 ou encore à un contacteur non représenté monté sur un instrument. Le régulateur 62 qui est réglé de manière à livrer de l'air sous une pression de 2 atmosphères comprend une première sortie 68 parvenant à l'entrée P d'une électro-valve 69 par l'intermédiaire d'un deuxième régulateur de pression 70 réglé de manière à abaisser la pression à 0,5 atmosphère. L'électro-valve 69 fonctionne de la même manière que les électro-valves 63, 64 et 65 et un signal positif doit être appliqué simultanément sur ses deux électrodes 66 et 67 pour ouvrir la voie allant de l'entrée P à la sortie A. Comme pour les électro-valves 63 à 65, les électrodes 66 et 67 de l'électro-valve 69 sont branchées à un potentiel positif par l'intermédiaire de l'interrupteur de présélection 32a et du commutateur à pied 10. La sortie A de l'électro-valve 69 est reliée à la borne de sortie d'ozone 42a par l'intermédiaire d'un générateur d'ozone 71. L'air sous pression de 0,5 atmosphère provenant du régulateur 70 traverse la voie P A de l'électro-valve 67 lorsque celle-ci est ouverte, passe ensuite à travers le générateur d'ozone 71 où il se charge d'ozone pour être ensuite disponible à la borne d'alimentation à fermeture de sécurité 42a.

Le régulateur de pression 62 réglé à deux atmosphères présente une deuxième sortie 72 reliée aux entrées P des électro-valves 73, 74, 75, 76 et 77. Les sorties A des quatre électro-valves 73 à 76 sont branchées aux entrées de quatre éléments de purge rapide 78, 79, 80 et 81, dont les sorties sont reliées au haut des bouteilles de stockage de liquides 12, 13, 14 et 15 (voir également fig. 1) pour mettre les liquides qu'elles contiennent sous pression. Les éléments de purge 78 à 81 sont également des éléments Kuhnke (Allemagne) vendus sous le numéro 47 300 et présentant une bille 82 (voir élément 78) agissant comme élément de fermeture entre deux cônes 83 et 84 et une mise à l'échappement 85 de la conduite de sortie de l'élément si la conduite d'entrée n'est plus sous pression, comme c'est le cas dans la fig. 2 où la bille 82 est contre le cône 84 et ainsi laisse l'échappement 85 de l'élément 78 ouvert. Au moment où la voie P A de l'électro-valve 73 est ouverte, l'air sous pression de deux atmosphères provenant du régulateur 72 entre dans l'élément de purge rapide 78 et déplace la bille 82 contre le cône 83. La conduite d'échappement 85 est alors fermée et la bouteille 12 sous pression. A l'intérieur de chaque bouteille 12 à 15 est disposé un tube vertical 86, 87, 88 et 89, dont l'orifice est placé au bas de la bouteille, chacun des tubes 86 à 89 étant relié à la borne d'alimentation en liquides 36, respectivement 37, 38 et 39.

La sortie A de l'électro-valve 77 est reliée directement à la borne de connexion rapide 42 livrant de l'air sous une pression de 2 atmosphères.

Les électro-valves 73, 74, 75, 76 et 77 sont des éléments identiques aux électro-valves 63, 64, 65 et 69 et présentent chacune deux électrodes 66 et 67 représentées uniquement en regard de l'électro-valve 73. Les éléments de purge rapide 79, 80 et 81 sont également identiques à l'élément 78 et fonctionnent de la même manière. Ces quatre éléments 78 à 81 offrent l'avantage de libérer instantanément l'air sous pression contenu entre la surface du liquide et le haut des bouteilles 12 à 15, lorsque la voie P A des électro-valves 73 à 76 est fermée, la conduite d'échappement 85 (voir élément 78) restant ouverte lorsque la sortie A de l'électro-valve correspondante n'est pas sous pression.

Le distributeur de fluides décrit en regard des fig. 1 et 2 fonctionne comme suit:

Supposons que l'appareil qui vient d'être décrit en regard des fig. 1 et 2 soit destiné à une utilisation en odontologie et que le praticien désire effectuer un traitement des canaux radiculaires d'un patient pour les nettoyer. Comme décrit plus haut, les bouteilles 12, 13, 14 et 15 contiennent de la chloramine, de l'eau distillée, de l'hibitan et un sérum physiologique. Supposons que c'est la bouteille 12 qui comprend la chloramine et que le praticien désire nettoyer les canaux mentionnés ci-dessus avec de la chloramine. Le praticien branche alors un tuyau souple terminé par une canule à la prise de connexion rapide 36 (fig. 1 et 2). Il presse ensuite l'interrupteur 26 (fig. 1) qui présélectionne la fonction d'alimentation de la bouteille 12. Il introduira alors la canule dans le canal radiculaire à nettoyer et actionnera le commutateur à pied 10 au moment où il désire du liquide. Comme décrit plus haut, l'action simultanée de l'interrupteur 26 et du commutateur à pied 10 consiste à appliquer un signal positif sur les deux électrodes 66 et 67 de l'électro-valve 73 et à ouvrir la voie P A de la dite électro-valve. La voie P A de l'électro-valve 73 étant ouverte, l'élément de purge rapide 78 est mis sous pression et la conduite de purge 85 fermée. La bouteille 12 est alors sous pression et la chloramine qu'elle contient peut s'écouler par la borne de connexion rapide 36 vers la canule. Au moment où le nettoyage est terminé, le praticien relâche la pression appliquée sur le commutateur à pied 10, ce qui enlève le signal positif à la borne 67 de l'électro-valve 73. La voie P A est alors instantanément fermée et la bille 82 de l'élément de purge rapide 78 qui était contre la butée 83 et fermait la conduite de purge 85 revient en 82, ce qui a pour effet de libérer la conduite de purge rapide ou conduite d'échappement 85. L'air sous pression de deux atmosphères de la bouteille 12 s'échappe alors instantanément, ce qui coupe l'alimentation en chloramine. L'avantage de la combinaison de l'électro-valve 73 avec l'élément à purge rapide 78 réside dans le fait que le praticien peut stopper instantanément l'alimentation en liquide en relâchant le commutateur à pied 10. Il est donc parfaitement maître du dosage de liquide qu'il entend appliquer.

Supposons maintenant que le praticien désire utiliser l'instrument 45 qui est une seringue à l'air et à l'eau. Comme mentionné plus haut en regard de la fig. 1, l'instrument 45 est branché aux bornes à connexion rapide 35 et 39, ces bornes livrant respectivement de l'air sous pression et le liquide contenu dans la bouteille 15. Supposons que la bouteille 15 contienne de l'eau distillée. Lorsqu'il veut utiliser de l'eau distillée, le praticien presse l'interrupteur 29 et la seringue 45 lui livrera de l'eau distillée au moment où il actionne le commutateur à pied 10. Sil veut de l'air comprimé, le praticien mettra hors contact l'interrupteur 29 et pressera l'interrupteur 25 qui rendra disponible l'alimentation en air comprimé au moment où une pression sera exercée sur le commutateur à pied 10. Comme mentionné plus haut, l'action du commutateur à pied 10 peut être remplacée par une action au moyen d'un interrupteur branché sur l'instrument 45. D'autre part, l'action exercée par l'un ou l'autre des interrupteurs 25 ou 29 peut être remplacée par une action exercée par un interrupteur indépendant solidaire du porte-instrument 47, interrupteur non représenté qui donne un contact au moment où l'instrument 45 est retiré du porte-instrument 47. Comme expliqué ci-dessus, le praticien peut disposer sur les bornes 35 et 39 d'eau distillée seulement, ou d'air comprimé seulement, ou des deux à la fois. Il peut donc effectuer des rinçages et des séchages par une simple action sur les interrupteurs 25 et 29.

La construction des quatre unités de stockage de liquides 12, 13, 14 et 15 en combinaison avec les électro-valves 73, 74, 75, 76 et les éléments à purge rapide 78, 79, 80 et 81 permet un grand nombre de possibilités d'utilisation de l'appareil. En effet, il est sans autre possible de transvaser le liquide d'une bouteille vers une autre. Supposons que l'on désire transvaser le contenu de la bouteille 15 dans la bouteille 14, il suffira alors de relier au moyen d'un tuyau souple non représenté la borne à connexion rapide 39 à la borne 38. On présélectionnera l'interrupteur 29 et l'on appuyera sur le commutateur à pied 10. Les deux électrodes de l'électro-valve 76 auront alors un potentiel positif, ce qui ouvrira la voie P A de la dite électro-valve et mettra la bouteille 15 sous pression. Comme les bornes à connexion rapide 39 et 38 sont reliées, et que la conduite d'échappement ou de purge de l'élément de purge rapide 80 est ouverte, le liquide pourra s'écouler sans difficulté de la bouteille 15 à la bouteille 14. L'homme du métier comprend aisément qu'il est également possible de remplir une bouteille, par exemple de remplir la bouteille 15 sans dévisser cette dernière à partir d'une bouteille tenue par le praticien. Une telle façon de faire est particulièrement intéressante pour des raisons d'asepsie. Le praticien branche alors un tube plongeant dans la bouteille qu'il tient dans la main avec la prise à connexion rapide 39 en liaison avec l'intérieur de la bouteille 15. Il met hors contact l'interrupteur correspondant 29 afin que la dite bouteille 15 ne soit pas sous pression. Il relie alors une borne d'air sous pression, par exemple la borne 42, à l'aide d'un tuyau souple avec l'extrémité supérieure de la bouteille qu'il tient à la main dans le but de mettre celle-ci sous pression. Il présélectionne l'interrupteur 32 correspondant à la borne 42 et actionne le commutateur à pied 10. La bouteille qu'il tient à la main est alors sous pression et le liquide s'écoule dans la bouteille 15 par l'intermédiaire de la borne à connexion rapide 39, le transvasage étant possible vu le fait que la conduite d'échappement de l'élément à purge rapide 81 est ouverte. Le transvasage d'une bouteille à l'autre se fait alors dans des conditions d'aseptie optimum, car les bouteilles ne sont pas ouvertes et l'air sous pression utilisé pour effectuer le transvasage provenant de la borne 42 est un air filtré et propre, ce qui n'est pas le cas de l'air ambiant qui entre en contact avec les liquides au moment où les bouteilles sont ouvertes.

La caractéristique la plus intéressante du distributeur décrit dans les fig. 1 et 2 réside dans le fait qu'il comprend un générateur d'ozone incorporé 71 livrant de l'ozone sous une pression de 0,5 atmosphère à la borne 42a. La présence de ce générateur d'ozone incorporé est due aux résultats de travaux expérimentaux faits en laboratoire. Les résultats cliniques ont prouvé son efficacité. De longue date déjà, l'ozonothérapie s'est révélée très efficace dans de multiples traitements en médecine dentaire. Elle est appliquée avec succès par les Professeurs Fisch, Dechaume, Brunnel, Sandhaus, ainsi que beaucoup d'autres dans les traitements de l'odontologie, parodontologie et après les interventions chirurgicales, telles que les extractions, kysectomie, etc. Les propriétés de l'ozone sont bien connues. On rappellera qu'elles sont la conséquence de son instabilité et que, libérant de l'oxygène naissant, elles en font un bactéricide puissant, présentant une grande affinité pour les tissus. L'ozone d'une part, attaque et détruit nombre de microbes et amoindrit la virulence des plus résistants en provoquant autour d'eux la formation d'un coagulum isolant. D'autre part, il favorise les réactions défensives de l'organisme: les leucocytes et les éléments du système réticulo-endotélial sont activés, d'où augmentation de la diapédèse, la formation d'oxyhémoglobine est accélérée. Il en résulte que les manifestations inflammatoires et infectieuses sont efficacement surmontées. Les phénomènes de décomposition sont limités et les processus de cicatrisation accélérés. Il était dès lors intéressant d'avoir une source d'ozone dans le distributeur des fig. 1 et 2. D'autre part, l'ozone étant un désinfectant, cette source d'ozone disponible à la borne 42a du distributeur peut être utilisée pour désinfecter les liquides et les conduites internes et externes de l'appareil. En effet, supposons que l'on désire désinfecter l'eau distillée contenue dans la bouteille 15. On branchera alors la borne de connexion rapide d'alimentation en ozone 42a à la borne de connexion rapide 39. L'interrupteur 32a sera enclenché et l'interrupteur 29 sera mis hors contact. Par une pression du pied sur le commutateur 10, l'alimentation en ozone parviendra à la borne 42a, passera par l'intermédiaire d'un tuyau souple non représenté à la borne de connexion rapide 39, parviendra à l'intérieur du liquide et le lavera pour ressortir par la conduite d'échappement de l'élément de purge rapide 81. Lors de ce passage, l'ozone désinfectera la borne 42a, la conduite souple reliant la borne 42a à la borne 39, la borne 39, la conduite allant de la borne 39 à l'intérieur du liquide, le liquide contenu dans la bouteille 15, l'intérieur de la bouteille 15, la conduite d'échappement et l'élément de purge rapide 81. La source d'ozone pourra donc être utilisée pour désinfecter les voies internes du distributeur, les tuyaux d'interconnexion, les bornes d'alimentation, etc. D'autre part, en plus de cette fonction de désinfection, l'ozone pourra être utilisé pour tous les traitements de médecine dentaire.

Mis à part ses bornes de connexion rapide avec fermeture à verrouillage d'alimentation en liquides 36, 37, 38, 39, en air sous pression réglable de 0 à 6 atmosphères 33, 34, 35, en air sous pression constante de 2 atmosphères 42 et d'alimentation en ozone sous pression de 0,5 atmosphère 42a, le distributeur de fluides de la fig. 2 présente finalement comme décrit en regard de la fig. 1 deux bornes de connexion rapide avec fermeture à verrouillage d'alimentation en eau 40 et 41. Ces bornes d'alimentation en eau 40 et 41 sont identiques aux bornes 33 à 35, 36 à 39, 42 et 42a. Comme représenté dans la fig. 2, une conduite d'alimentation en eau 90 provient du boîtier de raccordement 6 représenté dans la fig. 1 et est relié à une des électro-valves d'entrée pouvant être ouverte ou fermée à l'aide de l'interrupteur général 8. La conduite d'alimentation 90 en eau se subdivise en deux parties reliées chacune à l'entrée P d'une électro-valve 91, respectivement 92, dont la sortie A parvient à la borne à connexion rapide 40, respectivement 41. Les électro-valves 91 et 92 sont en tout point identiques aux autres électro-valves contenues dans le distributeur des fig. 1 et 2 et sont également commandées par deux électrodes non représentées. L'une de ces électrodes est reliée à l'interrupteur 30, respectivement 31, l'autre étant reliée au commutateur à pied 10 ou éventuellement à un interrupteur non représenté monté sur une canule qui sera branchée à la borne d'alimentation en eau correspondante à l'aide d'un tuyau souple. Les alimentations en eau 40 et 42 fonctionnent donc exactement de la même manière que les alimentations en liquides 36 à 39 ou en air 33 à 35, 42, ou encore en ozone 42a.

En examinant le boîtier de la fig. 1, on remarque que les bornes à connexion rapide et à verrouillage de sécurité 36, 37, 38 et 39 destinées à l'alimentation en liquides contenus dans des unités de stockage 12, 13, 14 et 15 sont placées à côté de bornes identiques d'alimentation en air comprimé 42, respectivement 33, 34 et 35. Ainsi, une borne d'alimentation en liquide a toujours pour voisine une borne d'alimentation en air comprimé. Ceci permet au praticien d'avoir toujours une source d'air qui lui permettra de sécher les parties qu'il aura traitées préalablement avec du liquide. Il pourra pour ce faire utiliser des canules à deux gicleurs indépendants alimentés par un double tuyau, le double tuyau étant branché à deux bornes d'alimentation adjacentes, par exemple une borne d'alimentation en un liquide contenu dans une des unités de stockage et une borne d'alimentation en air sous pression. De telles canules à plusieurs gicleurs existent sur le marché et elles pourront être avantageusement utilisées avec le distributeur décrit en regard des fig. 1 et 2. Il est encore à remarquer que les bornes d'alimentation en eau 41 et 42 sont respectivement placées à proximité des bornes d'alimentation de la première unité de stockage 12, respectivement de la dernière unité de stockage 15.

Le distributeur de liquides, d'eau, d'air sous pression et d'ozone qui vient d'être décrit est principalement destiné à équiper un cabinet dentaire. Ce distributeur a les dimensions suivantes: il présente une hauteur réglable allant de 600 à 750 mm et la tablette supérieure du boîtier 1 présente des dimensions de 445/330 mm. Le boîtier de raccordement 6 présente les dimensions suivantes: 305×245×120 mm.

Le distributeur tel que représenté dans la fig. 1 aura comme instruments de base:

— une seringue air-eau-spray,
— un moteur à air (Bien-Air, Aristocrat ou Midwest Shorty),
— une seringue automatique à air comprimé,
— un porte-canule pour ozone,
— un tuyau de raccordement pour turbine.

Il pourra être équipé sur option

— d'une turbine (Bien-Air, Kavo ou Midwest),
— d'un détartreur à quartz,
— d'un moteur supplémentaire (Bien-Air, Aristrocrat ou Midwest).

Les interrupteurs auront bien évidement des couleurs choisies en fonction de l'alimentation qu'ils présélectionnent. On aura par conséquent des interrupteurs jaunes pour l'eau du réseau, des interrupteurs rouges pour l'air à 2 atmosphères, des interrupteurs de sélection bleus pour les liquides contenus dans les unités de stockage, des interrupteurs blancs pour l'air sous pression de 0 à 6 atmosphères et un interrupteur de présélection vert pour l'ozone.

Bien que le distributeur de fluides qui vient d'être décrit soit spécialement agencé pour être utilisé dans un cabinet dentaire, il va de soi pour l'homme du métier qu'il peut être transformé facilement pour être utilisé dans la médecine en général, notamment en chirurgie, où l'alimentation en continu de liquides tel que du sérum physiologique ou de tout antiseptique est toujours nécessaire. Pour une utilisation en chirurgie, il est évident que tous les instruments spécifiques à l'art dentaire seront remplacés par des instruments spécifiques à la médecine, par exemple seringue automatique à air comprimé, canules, forets, etc.

Les caractéristiques importantes du distributeur sont l'alimentation en continu de liquides, cette alimentation étant enclenchée ou stoppée instantanément par le praticien par une simple commande électrique, la possibilité de transvaser des liquides ou de remplir les unités de stockage par transvasage sans remplacer les dites unités et amener ainsi les liquides en contact avec l'air ambiant, et la possibilité de désinfecter les unités de stockage, leur contenu, ainsi que les conduites intérieures et extérieures du distributeur avec de l'ozone sous pression provenant du dit distributeur.

Il est finalement à remarquer que le distributeur qui vient d'être décrit travaille dans des conditions d'aseptie élevées relativement à l'art antérieur. La distribution des liquides, qui se fait en circuit fermé, dans des éléments susceptibles d'être tous désinfectés, est particulièrement satisfaisante. L'air sous pression utilisé pour propulser les liquides est filtré à $2\,\mu$ dans le boîtier de raccordement, de sorte que cet air peut être considéré comme pratiquement pur.

**Revendications**

1. Distributeur de fliudes sous pression, notamment pour usage dentaire, comprenant un boîtier (1), au moins une unité de stockage d'un liquide (12, 13, 14, 15), une source d'air comprimé (60), une électro-valve (73, 74, 75, 76) étant connectée entre l'unité de stockage (12, 13, 14, 15) et la source d'air comprimé (60) et étant agencée pour ouvrir ou fermer l'amenée d'air comprimé dans l'unité de stockage (12, 13, 14, 15), un canal d'évacuation (86, 87, 88, 89) plongeant dans le liquide de l'unité de stockage étant connecté à une borne d'évacuation du liquide à connexion rapide (36, 37, 38, 39) placée sur le boîtier, caractérisé en ce qu'au moins une deuxième électro-valve (63, 64, 65, 69, 77, 91) est connectée entre la source d'air comprimé (60) et au moins une borne de sortie d'air comprimé à connexion rapide (33, 34, 35, 40, 41, 42, 42a), les bornes de sortie d'air comprimé à connexion rapide (33, 34, 35, 40, 41, 42, 42a) étant placées sur le boîtier (1) adjacentes à la borne de connexion rapide (36, 37, 38, 39) reliée au canal d'évacuation (86, 87, 88, 89) de l'unité de stockage (12, 13, 14, 15), chacune des électro-valves (73, 74, 75, 76, 77) comprenant deux électrodes de commande (66, 67) et étant ouvertes par deux actions simultanées de sélection et de commande sur chaque électrode (66, 67) au moyen d'interrupteurs de sélection (32, 26, 27, 28, 29), respectivement de commande (10, Fig. 1).

2. Distributeur selon la revendication 1, caractérisé en ce que les bornes de connexion rapide des sorties de liquide et d'air comprimé sont placées adjacentes par paire (36 et 42, 37 et 33, 38 et 34, 39 et 35) sur le boîtier.

3. Distributeur selon la revendication 1, caractérisé en ce qu'un générateur d'ozone (71) est placé à la suite d'une électro-valve (69), elle-même reliée à la source d'air comprimé (60), le générateur (71) aboutissant à une borne de sortie à connexion rapide (42a).

4. Distributeur selon la revendication 1, caractérisé en ce qu'il comprend une conduite d'alimentation en eau (90) et au moins une borne de sortie d'eau à connexion rapide (40 ou 41), une électro-valve (91) étant placée entre la conduite (90) et la borne de sortie d'eau à connexion rapide (40 ou 41).

5. Distributeur selon une des revendications 2, 3 ou 4, caractérisé en ce qu'un interrupteur de sélection (23, 24, 25, 32a, 26, 27, 28, 29, 32, 30, 31) en liaison avec une électrode (66) de chaque électro-valve (63, 64, 65, 69, 77, 74, 75, 76, 77, 91 et 92) est prévu pour chaque électro-valve et placé sur le boîtier (1) en regard de la borne de connexion rapide d'évacuation correspondante (33, 34, 35, 42a, 36, 37, 38, 39, 42, 40, 41), les deuxièmes électrodes (67) de chaque électro-valve étant reliées à un interrupteur de commande général commun (10, fig. 1) ou à un interrupteur de commande indépendant.

6. Distributeur selon la revendication 1, caractérisé en ce qu'il comprend des tuyaux souples aptes à relier entre elles deux bornes à connexion rapide.

7. Distributeur selon la revendication 1, caractérisé en ce que les sorties des électro-valves (73, 74, 75, 76) permettant d'amener l'air sous pression dans les unités de stockage (12, 13, 14, 15) sont reliées aux unités de stockage par l'intermédiaire d'un élément de purge rapide automatique (78, 79, 80, 81) ouvrant une conduite d'échappement lorsqu'il n'est pas sous pression.

**Patentansprüche**

1. Verteiler für Fluida unter Druck, insbesondere für zahnärztliche Anwendungen, mit einem Gehäuse (1), mindestens einer Flüssigkeits-Vorratsvorrichtung (12, 13, 14, 15), einer Druckluftquelle (60), einem Magnetventil (73, 74, 75, 76), das zwischen die Flüssigkeits-Vorratsvorrichtung (12, 13, 14, 15) und die Druckluftquelle (60) geschaltet ist und die Luftzufuhr zur Flüssigkeits-Vorratsvorrichtung (12, 13, 14, 15) zu öffnen oder zu schliessen gestattet, einer Abgabeleitung (86, 87, 88, 89), die in die Flüssigkeit der Vorratsvorrichtung eintaucht und mit einem Abgabe-Schnellanschluss (36, 37, 38, 39) am Gehäuse verbunden ist, dadurch gekennzeichnet, dass mindestens ein zweites Magnetventil (63, 64, 65, 69, 77, 91) zwischen die Druckluftquelle (60) und mindestens einen Druckluft-Schnellanschluss (33, 34, 35, 40, 41, 42, 42a) geschaltet ist, wobei die Druckluft-Schnellanschlüsse (33, 34, 35, 40, 41, 42, 42a) am Gehäuse (1) in der Nähe der Schnellanschlüsse (36, 37, 38, 39) der Entleerungsleitungen (86, 87, 88, 89) der Flüssigkeits-Vorratsvorrichtung (12, 13, 14, 15) angebracht sind und jedes Magnetventil (73, 74, 75, 76, 77) zwei Steuerelektroden (66, 67) aufweist und durch zwei gleichzeitige Signale an den Elektroden (66, 67) nämlich ein Wahlsignal und ein Befehlssignal, mittels Wahlschaltern (32, 26, 27, 28, 29) bzw. Befehlsschaltern (10; Fig. 1) geöffnet wird.

2. Verteiler nach Anspruch 1, dadurch gekennzeichnet, dass die Schnellanschlüsse der Flüssigkeitsabgabe und der Druckluft paarweise (36 und 42; 37 und 33; 38 und 34; 39 und 35) am Gehäuse angeordnet sind.

3. Verteiler nach Anspruch 1, dadurch gekennzeichnet, dass ein Ozongenerator (71) nach einem Magnetventil (69) angeordnet ist, welches mit der Druckluftquelle (60) verbunden ist, und dass der Generator (71) an einem Abgabe-Schnellanschluss (42a) liegt.

4. Verteiler nach Anspruch 1, dadurch gekennzeichnet, dass er eine Wasserspeiseleitung (90) und mindestens einen Wasserabgabe-Schnellanschluss (40 oder 41) aufweist, wobei ein Magnetventil (91) zwischen der Leitung (90) und dem Wasserabgabe-Schnellanschluss (40 oder 41) eingebaut ist.

5. Verteiler nach einem der Ansprüche 2, 3 und 4, dadurch gekennzeichnet, dass ein Wahlschlater (23, 24, 25, 32a, 26, 27, 28, 29, 32, 30, 31) mit Verbindung mit einer Elektrode (66) jedes Magnetventils (63, 64, 65, 69, 77, 74, 75, 76, 77, 91 und 92) für jedes Magnetventil vorgesehen und am Gehäuse (1) gegenüber dem entsprechenden Flüssigkeitsabgabe-Schnellanschluss (33, 34, 35, 42a, 36, 37, 38, 39, 42, 40, 41) angeordnet ist, und dass die zweiten Elektroden (67) jedes Magnetventils mit einem gemeinsamen allgemeinen Befehlschlater (10, Fig. 1) oder mit einem gesonderten Befehlschalter verbunden ist.

6. Verteiler nach Anspruch 1, dadurch gekennzeichnet, dass er biegsame Schläuche zur Verbindung von zwei Schnellanschlüssen miteinander aufweist.

7. Verteiler nach Anspruch 1, dadurch gekennzeichnet, dass die Ausgänge der Magnetventil (73, 74, 75, 76), die eine Zufuhr von Druckluft zu den Flüssigkeits-Vorratsvorrichtungen (12, 13, 14, 15) gestatten, mit letzteren über ein automatisches Schnellentlüftungsorgan (78, 79, 80, 81) verbunden sind, welches eine Abzugsleitung öffnet, wenn es nicht unter Druck steht.

**Claims**

1. A distributor for fluids under pression, especially for dental uses, comprising a housing (1); at least one liquid storage unit (12, 13, 14, 15), a compressed air source (60), an electro-

8

valve (73, 74, 75, 76) being connected between the storage unit (12, 13, 14, 15) and the compressed air source (60) and being arranged to open or close the compressed air inlet into the storage unit (12, 13, 14, 15); and a delivery conduct (86, 87, 88, 89) dipping into the liquid of the storage unit and being connected to a quick-fitting liquid delivery post (36, 37, 38, 39) mounted on the housing, characterized by the fact that at least a second electro-valve (63, 64, 65, 69, 77, 91) is inserted between the compressed air source (60) and at least one quick-fitting compressed air delivery post (33, 34, 35, 40, 41, 42, 42a), said quick-fitting compressed air delivery posts (33, 34, 35, 40, 41, 42, 42a) being disposed on the housing (1) adjacent to the quick-fitting post (36, 37, 38, 39) connected to the delivery conduit (86, 87, 88, 89) of the storage unit (12, 13, 14, 15), each electro-valve (73, 74, 75, 76, 77) having two actuation electrodes (66, 67) and being opened by two simultaneous actions, a selection and a control one, on the electrodes (66, 67) by means of selection switches (32, 26, 27, 28, 29) and, respectively, control switches (10, Fig. 1).

2. The distributor of claim 1, characterized by the fact that the quick-fitting liquid delivery posts and compressed air delivery posts are arranged in adjacent relationship by parts (36 and 42, 37 and 33, 38 and 34, 39 and 35) on the housing.

3. The distributor of claim 1, characterized by the fact that an ozone generator (71) is mounted downstream an electro-valve (69) which is in turn connected to the compressed air source (60), said generator (71) leading to a quick-fitting delivery post (42a).

4. The distributor of claim 1, characterized by the fact that it comprises a water supply line (90) and at least one quick-fitting water delivery post (40 or 41), an electro-valve (91) being inserted between the line (90) and the quick-fitting water delivery post (40 or 41).

5. The distributor of claims 2, 3 and 4, characterized by the fact that a selector switch (23, 24, 25, 32a, 26, 27, 28, 29, 32, 30, 31) connected to one electrode (66) of each electro-valve (63, 64, 65, 69, 77, 74, 75, 76, 77, 91 and 92) is provided for each electro-valve and mounted on the housing (1) facing the corresponding quick-fitting delivery post (33, 34, 35, 42a, 36, 37, 38, 39, 42, 40, 41), said second electrodes (67) of each electro-valve being connected to a general common control switch (10, Fig. 1) or to an independent control switch.

6. The distributor of claim 1, characterized by the fact that it is equipped with flexible hoses capable of connecting two quick-fitting posts together.

7. The distributor of claim 1, characterized by the fact that the outlets of the electro-valves (73, 74, 75, 76) permitting the inlet of pressurized air into the storage units (12, 13, 14, 15), are connected to the storage units via an element for automatic and rapid air relief, opening an exhaust line when it is not under pressure.

FIG. 1

FIG. 2